# EUROPÄISCHE PATENTSCHRIFT

(11) **EP 3 622 255 B1**
(45) Veröffentlichungstag und Bekanntmachung des Hinweises auf die Patenterteilung: **22.06.2022**
(21) Anmeldenummer: 18724221.9
(22) Anmeldetag: 09.05.2018
(51) Int. Cl.: G01D 5/20, G01P 3/48, F02D 41/00, G01P 3/488, F02D 41/28

(54) **MESSANORDNUNG ZUR MESSUNG EINER DREHLAGE UND/ODER EINER DREHZAHL EINER KURBELWELLE**
MEASURING ARRANGEMENT FOR MEASURING A ROTATIONAL POSITION AND/OR A ROTATIONAL SPEED OF A CRANKSHAFT
DISPOSITIF DE MESURE POUR MESURER UNE POSITION ROTATIVE ET/OU UNE VITESSE DE ROTATION D'UN VILEBREQUIN

(30) Priorität: 12.05.2017 DE 102017110391; 05.04.2018 DE 102018108019
(43) Veröffentlichungstag der Anmeldung: 18.03.2020
(73) Patentinhaber: Rheinmetall Air Defence AG, 8050 Zürich (CH)
(72) Erfinder: FRICK, Henry Roger, 8442 Hettlingen (CH)
(74) Vertreter: Kirschner, Sebastian
(86) Internationale Anmeldenummer: PCT/EP2018/062128
(87) Internationale Veröffentlichungsnummer: WO 2018/206714

(56) Entgegenhaltungen:
- EP-A1- 2 666 696
- DE-A1- 10 304 699
- GB-A- 2 231 161
- US-A- 4 507 639
- US-A- 5 621 179

## Beschreibung

Die Erfindung betrifft eine Messanordnung zur Messung einer Drehlage und einer Drehzahl einer Kurbelwelle, mit den Merkmalen des Oberbegriffes des Patentanspruches 1.

Die Messanordnung ist geeignet, die Drehlage und/oder die Drehzahl einer sich drehenden oder stehenden Kurbelwelle zu bestimmen. Die Kurbelwelle ist in einem Verbrennungsmotor angeordnet. In bevorzugter Ausgestaltung wird ferner auch das Vibrationsverhalten der Welle mit der Messanordnung und dem Verfahren überwacht.

Aus der DE 103 04 699 A1 ist eine Kolbenbrennkraftmaschine bekannt, wobei die Winkellage in der Kurbelwelle über ein mit der Kurbelwelle drehfest verbundenes Geberrad und ein relativ zur Kurbelwelle feststehenden Aufnehmer zum Abtasten eines Flankenmuster des Geberrades bestimmt wird. Diese Bestimmung erfolgt einmal pro Umdrehung des Geberrades. Um bereits zu einem früheren Zeitpunkt die Absolutlage der Kurbelwelle bestimmen zu können, wird mittels eines Hall-Sensors oder mittels induktiver oder magnetoresistiver Sensoren zusätzlich die Stellung mindestens eines Ausgleichsgewichts der Kurbelwelle detektiert. Das Geberrad ist koaxial zur Kurbelwelle angeordnet und drehfest mit der Kurbelwelle verbunden. Das Geberrad weist als Oberflächenstruktur ein Flankenmuster mit sechzig Zähnen und zwei fehlenden Zähnen auf. Der Aufnehmer tastet das Flankenmuster des Geberrades ab. Der Aufnehmer ist so angeordnet, dass die vom Flankenmuster des Geberrades definierten Markierungen in unmittelbarer Nähe an ihm vorbei laufen. Die vom Aufnehmer beim Vorbeilaufen der Markierung des Flankenmusters abgegebenen Spannungsimpulse werden einer Auswerteschaltung zugeführt und hier beispielsweise zu rechteckförmigen Spannungsimpulsen aufbereitet und anschließend in einem Steuergerät ausgewertet.

Die GB 2 231 161 A1 offenbart eine Messanordnung für eine Winkelposition einer Welle. Eine Sendespule dient zur Erzeugung eines elektromagnetischen Feldes. Die Welle trägt eine nicht rotationssymmetrische Hülse in einer Messsektion. Es sind zwei Sekundärspulen vorhanden, die gegensinnig gewickelt sind.

In der US 5,621,179 A wird eine Messanordnung mit Primärspulen offenbart, die mit einer Wechselspannungsquelle verbunden sind. Zwei Sekundärspulen sind koaxial zu den beiden Bereichen der Primärspulen angeordnet. Die Welle weist einen nicht rotationssymmetrischen Querschnitt auf. Die Anordnung in einem Hohlleiter ist hier ebenfalls nicht offenbart.

Aus der EP 2 666 696 A1 ist ein Neigungssensor für einen Zug bekannt.

Der Neigungssensor weist einen Rotor und einen Stator auf.

Der Erfindung liegt daher die Aufgabe zugrunde, eine Messanordnung bereitzustellen, mit welcher ohne zusätzliche Sensoranordnung direkt die absolute Drehlage und/oder Drehzahl einer Kurbelwelle eindeutig bestimmbar ist.

Diese der Aufgabe zugrunde liegende Erfindung wird nun durch eine Messanordnung mit den Merkmalen des Patentanspruches 1 gelöst.

Durch die Drehung der Kurbelwelle um ihre Rotationsachse werden eine Kurbelwange und ein Gegengewicht mit derselben Drehzahl gedreht. Die Kurbelwange und das Gegengewicht dienen hier als Messsektion. Die Kurbelwange und das Gewicht weisen einen nicht punktsymmetrischen Querschnitt auf und haben einen entsprechenden Bereich mit einem größeren Wellenradius und einen Bereich mit einem kleineren Wellenradius. Im Bereich der Kurbelwange ist der Wellenradius maximal und im Bereich des Gegengewichts liegt der Wellenradius in einem kleineren Bereich und variiert nur wenig. Dadurch dass die Kurbelwange und das Gegengewicht starr mit der Kurbelwelle verbunden sind oder ein Teil der Kurbelwelle sind, bedeutet dies, dass sich aus der Kenntnis der Lage der Kurbelwange und/oder des Gegengewichts die Stellung der Kurbelwelle und damit der Kolben bestimmt werden kann. Der Kolben ist über eine Pleuelstange mit der Kurbelwelle verbunden. Weiter lässt sich mit der Stellung eines Kolbens auch die Stellung aller Nachbarkolben bestimmen. Hierzu wird nur eine Messanordnung benötigt, um alle Positionen aller Kolben zu erhalten.

Die Messanordnung weist einen Hohlleiter mit einer Hohlleiterinnenwand, eine Sendespule und mehreren Empfangsspulen auf. Insbesondere können vier Empfangsspulen vorhanden sein. Die Empfangsspulen sind als Sektorspulen ausgebildet. Die Sektorspule weist dabei einen bogensegmentförmigen Leiter auf, der sich entlang eines Bogensegments mit dem Winkel 180° -2*β erstreckt. Der Winkel β liegt dabei vorzugsweise im Bereich zwischen als 60° und 30 °. Der Winkel β kann insbesondere 45°betragen.

Die Kurbelwelle ist zumindest teilweise in einem Hohlleiter angeordnet. Innerhalb des Hohlleiters sind die Kurbelwange und das Gegengewicht angeordnet. Eine Sendespule und mehrere von der Sendespule beabstandete Empfangsspulen sind in dem Hohlleiter angeordnet. Mittels der Sendespule ist ein elektromagnetisches Feld erzeugbar. Das elektromagnetische Feld ist von den Empfangsspulen empfangbar. Die Sendespule erzeugt nun eine charakteristische elektromagnetische Feldverteilung, welche durch die Lage und Drehung der Kurbelwange und das Gegengewicht verändert wird. Je nach Lage der Kurbelwange und des Gegengewichts verändert sich die elektromagnetische Feldverteilung auf eine bestimmte Weise. Die mehreren Empfangsspulen messen bestimmte Größen des elektromagnetischen Feldes und aus den Messresultaten werden die Drehzahl und die Lage der Kurbelwelle bestimmt.

An der Sendespule liegt hierzu ein elektrisches Signal an. Das elektrische Signal weist eine Trägerfrequenz auf. Diese Trägerfrequenz des elektrischen Signals liegt unterhalb der kleinsten Grenzfrequenz des Hohlleiters. Dies hat den Vorteil, dass das erzeugte, elektromagnetische Feld sehr stark örtlich konzentriert ist. Somit kann im Hohlleiter keine Kurbelwellenausbreitung stattfinden und lediglich ein vernachlässigbarer Anteil der elektromagnetischen Energie verlässt den Hohlleiter. Vernachlässigbar bedeutet in diesem Zusammenhang, dass die Messanordnung keine anderen im Motor oder im Fahrzeug vorhandenen elektronischen Geräte in ihrer Arbeitsweise stört oder beeinträchtigt. Weiter werden auch die Drehzahl und das Vibrationsverhalten vorzugsweise gemessen. Bevorzugt sind die Drehzahl und die Vibrationen der Kurbelwelle mittels einer Frequenzspektrumanalyse, insbesondere einer Fast-Fourier-Transformation bestimmbar.

Die Empfangsspulen, welche von der Sendespule getrennt sind, empfangen jeweils ein Signal mit einer Amplitudenänderung. Die Trägerfrequenz ist so zu wählen, dass ein genügend hoher Pegel der induzierten Spannung in den Empfangsspulen erzeugt wird. Somit kann es in besonders vorteilhafter Ausgestaltung genügen, Spulen - nämlich entsprechende Empfangs- und Sendespulen - mit nur einer Windung einzusetzen. Hierdurch sind die Herstellungskosten reduziert.

Es wird nun ein Maß für die Drehstellung der Messsektionen aufgrund der Änderung eines empfangenen Signals der Empfangsspulen und ein Maß für die Drehlage der Kurbelwelle bestimmt. Es werden mehrere Kanäle zur Erfassung der Drehlage der Kurbelwelle (X- und Y-Richtung) und der Drehzahl der Kurbelwelle bereitgestellt. Ferner wird in bevorzugter Ausgestaltung noch das Vibrationsverhalten erfasst. Es sind vorzugsweise vier Empfangsspulen vorhanden.

Vorzugsweise sind jeweils zwei Empfangsspulen in einer Ebene angeordnet. Die Ebenen erstrecken sich in radialer Richtung der Kurbelwelle. Die erste Ebene mit zwei Empfangsspulen liegt dabei beabstandet auf einer Seite der Sendespule und die andere, zweite Ebene mit den anderen beiden Empfangsspulen liegt parallel zur ersten Ebene auf der anderen Seite der Sendespule. Die beiden Ebenen liegen axial vorzugsweise gleich beabstandet zur Sendespule. Die Empfangsspulen können dabei als Drahtschlaufen ausgebildet sein. Jede Empfangsspule erstreckt sich dabei mit einem Abschnitt kreisbogensegmentförmig um die Kurbelwelle.

Die Sendespule kann die Kurbelwelle nur teilweise umgreifen, was den Vorteil hat, dass die Messanordnung einfacher zu montieren ist. In alternativer Ausgestaltung umgreift die Sendespule die Kurbelwelle vollständig.

Die Sendespule und/oder die Empfangsspulen sind in ein Isolatormaterial eingebettet. Das Isolatormaterial schützt die Sendespule und die Empfangsspulen vor Umgebungseinflüssen und hält diese an ihren Plätzen.

Im Folgenden beschreibt die X-Richtung bzw. X-Achse eine erste radiale Richtung zur Kurbelwelle und eine Y-Richtung bzw. eine Y-Achse eine zweite radiale Richtung zur Kurbelwelle. Die X-Achse und die Y-Achse stehen vorzugsweise senkrecht zueinander, können jedoch auch einen Winkel kleiner als 90 Grad einschließen. Die Z-Richtung oder Z-Achse erstreckt sich in axialer Richtung der Kurbelwelle.

Zur Bestimmung der Drehlage in einer ersten radialen Richtung (X-Richtung) sind zwei der Empfangsspulen in einer ersten radialen Ebene diametral in X-Richtung beabstandet zur Kurbelwelle angeordnet. Zur Bestimmung der Drehlage in einer zweiten radialen Richtung (Y-Richtung) sind zwei weitere Empfangsspulen in einer radialen Ebene diametral in Y-Richtung beabstandet zur Kurbelwelle angeordnet. Ein Empfangsspulenpaar liegt dabei in X-Richtung beabstandet und insbesondere symmetrisch zur Y-Z-Ebene. Das andere Empfangsspulenpaar liegt dabei in Y-Richtung beabstandet und insbesondere symmetrisch zur X-Z-Ebene.

Für die Ausgangssignalbildung werden für die zwei Kanäle die Differenzen der momentanen Signalspannungen gebildet. Die Kanäle sind dabei der X- und Y-Achse zugeordnet. Es werden nun Differenzsignale aus den Signalen der ein Paar bildenden Empfangsspulen gebildet. Ein X-Kanal wird durch die Differenzbildung der Empfangssingale der in X-Richtung beabstandeten Spulen gebildet. Ein Y-Kanal wird durch die Differenzbildung der Empfangssignale der in Y-Richtung beabstandeten Spulen gebildet.

Ist die Kurbelwelle in bestimmten Drehlagen, den sogenannten Mittelstellungen angeordnet, so liegt am Ausgang der jeweiligen Differenzbildung keine Spannung an. Je nach Verschiebung ändern die Amplituden sich mit der Lage der Kurbelwelle. Zusammen ergeben diese beiden Werte eine vorzeichenbehaftete Regelspannung der entsprechenden Signale.

Die Kurbelwelle weist eine Messsektion auf. Die Messsektion weist einen nicht punktsymmetrischen Querschnitt und Bereiche mit einem größeren radialen Abstand und Bereiche mit einem kleineren radialen Abstand zur Drehachse auf, wobei ein von der Sendespule erzeugtes, durch die Stellung der Messsektion beeinflusstes, elektromagnetisches Feld von den Empfangsspulen empfangbar ist. Ein Maß für die Drehstellung der Messsektion wird aufgrund der empfangenen Signale der Empfangsspulen bestimmt.

Dreht sich nun die Kurbelwelle, so verändert sich zeitlich das elektromagnetische Feld im Hohlleiter. Treffen radial äußere Bereiche der Messsektion und die am nächsten zur Drehachse befindlichen Teilabschnitte der Empfangsspulen zusammen, so dass der radiale Abstand zwischen den Teilabschnitten und den Bereichen minimal ist, wird das elektromagnetische Feld dort geschwächt. Dies resultiert in einem lokalen Spannungsminimum des Empfangssignals, welches durch die Empfangsspule aus der elektromagnetischen Feldverteilung gemessen wird. Dreht sich die Messsektion weiter, so nimmt der Abstand zwischen den Bereichen und den Teilabschnitten zu und die Spannung des Empfangssignals nimmt ebenfalls zu und bildet ein lokales Spannungsmaximum. Der zeitliche Verlauf der Spannung des Empfangssignals bildet einen periodischen zeitlichen Verlauf. Bei einer Kurbelwellenumdrehung treten zwei Minima und zwei Maxima auf, wenn die Empfangsspulen je einen Teilabschnitt und die Messsektionen zwei Bereiche mit einem größeren radialen Abstand und zwei Bereiche mit einem kleineren radialen Abstand aufweisen. Bei einer anderen Formgebung der Messsektionen und der Empfangsspulen können mehr Maxima und Minima pro Kurbelwellenumdrehung beobachtet werden.

Es gibt nun eine Vielzahl von Möglichkeiten, die Messanordnung auszugestalten und weiterzubilden. Hierfür darf zunächst auf die dem Patentanspruch 1 nachgeordneten Patentansprüche verwiesen werden. Im Folgenden wird nun eine bevorzugte Ausgestaltung der Erfindung anhand der Zeichnung und der dazugehörigen Beschreibung näher erläutert. In der Zeichnung zeigt:
- Fig. 1: in einer schematischen perspektivischen Darstellung einen Teil eines Motors mit einem Kolben, einer Kurbelwelle und einer entsprechenden Messanordnung ohne Sendespule und Hohlleiter,
- Fig. 2a: in einer quergeschnittenen Darstellung eine Hohlleiteranordnung mit der Kurbelwelle geschnitten in einer Ebene A-A,
- Fig. 2b: in einer quergeschnittenen Darstellung die Hohlleiteranordnung mit der Messanordnung geschnitten in einer Ebene B-B,
- Fig. 2c: die Hohlleiteranordnung mit der Messanordnung geschnitten in einer Ebene C-C,
- Fig. 2d: in einer schematischen Schnittansicht eine Kurbelwellenanordnung mit einer Kurbelwelle und einem Hohlleiter mit der Messanordnung,
- Fig. 3: in einer schematischen Darstellung eine Schaltungsanordnung der Messanordnung, und
- Fig. 4: in einer schematischen Darstellung eine weitere Schaltungsanordnung der Messanordnung.

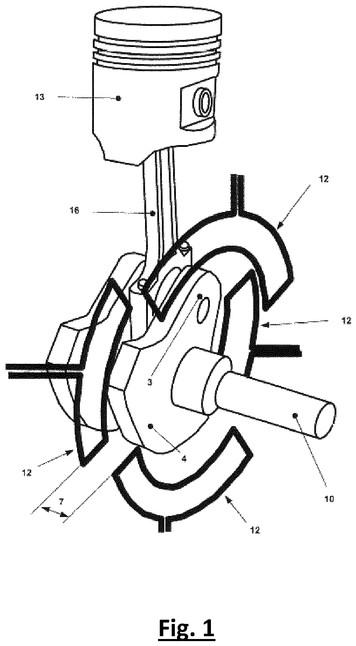

In Fig. 1 ist die Messanordnung ohne Hohlleiter 8, ohne Isolator 30 und ohne Sendespule 17 dargestellt. Gut zu erkennen ist eine Kurbelwelle 10, die um ihre Rotationsachse bzw. um ihre Drehachse 11 drehbar ist. Mit der Kurbelwelle 10 ist eine Kurbelwange 3 und ein Gegengewicht 4 drehfest verbunden. Die Kurbelwange 3 und das Gegengewicht 4 können Teil der Kurbelwelle 10 sein.

Durch die Kenntnis der Lage der Kurbelwange 3 und/oder des Gegengewichts 4 ist auch die Stellung eines Kolbens 13 bestimmbar, da der Kolben 13 über eine Pleuelstange 16 mit der Kurbelwelle 10 verbunden ist. Weiter lässt sich mit der Stellung eines Kolbens 13 auch die Stellung aller Nachbarkolben (nicht dargestellt) bestimmen. Somit wird nur eine Messanordnung benötigt, um alle Positionen aller Kolben zu erhalten.

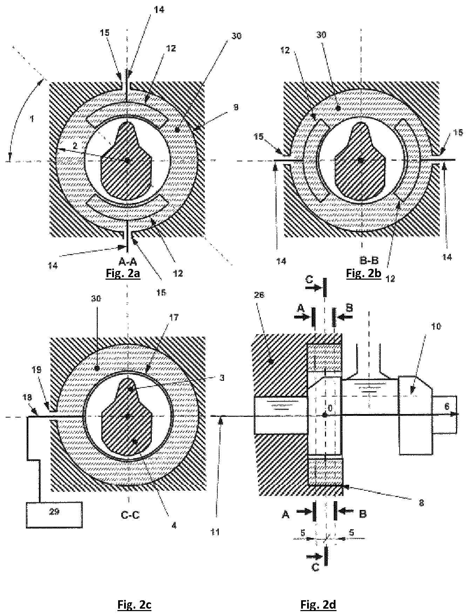

Im Folgenden darf nun auf Fig. 1 und die Fig. 2a bis 2d näher eingegangen werden.

Die Messanordnung besteht aus einem Hohlleiter 8 mit einer Hohlleiterinnenwand 9 und einer Sendespule 17 und insbesondere vier Empfangsspulen 12, welche als Sektorspulen mit dem Winkel β ausgebildet sind. Die Dimensionierung des Winkels β ist in Fig. 2a gut ersichtlich und mit dem Bezugszeichen 1 gekennzeichnet. Im Hohlleiter 8 befinden sich auch die Kurbelwange 3 und das Gegengewicht 4. Je nach Lage der Kurbelwange 3 und des Gegengewichts 4 verändert sich die elektromagnetische Feldverteilung auf eine bestimmte Weise. Die vier Empfangsspulen 12 messen bestimmte Größen des elektromagnetischen Feldes und aus den Messresultaten werden die Drehzahl und die Lage der Kurbelwelle 10 bestimmt. Weiter wird auch das Vibrationsverhalten gemessen. Die Frequenz des Signals der Sendespule 17 und damit auch des elektromagnetischen Feldes ist so zu wählen, dass die Frequenz unterhalb der kleinsten Grenzfrequenz der Hohlleiterwellenanordnung liegt und einen genügend hohen Pegel der induzierten Spannung in den Empfangsspulen erzeugt. Es können insbesondere eine Sendespule 17 und/oder Empfangsspulen 12 mit jeweils nur einer Windung eingesetzt werden. In Fig. 1 ist gut zu erkennen, dass die vier Empfangsspulen 12 auf zwei parallele, aber räumlich getrennte Ebenen mit einem Abstand 7 verteilt sind. Jede Ebene beinhaltet zwei Empfangsspulen 12, welche diametral gegeneinander platziert sind. Die jeweiligen Empfangsspulenpaare 12 sind um 90° zueinander gedreht.

Die Kurbelwelle 10 wird von einem elektrisch leitenden Rohr, welches nicht zwingend einen kreisförmigen Querschnitt aufweist, umschlossen. Dieses Rohr bildet in der dargestellten Ausgestaltung einen Hohlleiter mit kreisrundem Querschnitt und einem Hohlleiterinnenradius 2. Die Hohlleiterinnenwand 9 ist elektrisch gut leitend. Das Material um die Hohlleiterinnenwand 9 muss nicht zwingend elektrisch leitend sein. Die Rotationsachsen 11 der Kurbelwelle 10 fällt im Betriebszustand mit der Z-Achse 6 zusammen. Die Kurbelwelle 10 dreht sich um ihre Rotationsachse 11 mit der Drehzahl n.

Im Folgenden darf ein in der Gesamtheit nicht näher bezeichnete Messanordnung zunächst anhand der Fig. 2a bis 2d beschrieben werden.

Die Kurbelwelle 10 weist eine Rotationsachse 11 auf. Die Rotationsachse 11 der Kurbelwelle 10 bildet eine Z-Achse 6. Die Kurbelwelle 10 dreht sich um die Rotationsachse 11 mit einer Drehzahl n. Die Kurbelwelle 10 weist ein Gegengewicht 4 und einen großen Wellenradius im Bereich einer Kurbelwange 3 auf. Die Kurbelwange 3 und das Gegengewicht 4 sind kleiner als der Hohlleiterinnenradius 2.

Die Hohlleiterinnenwand 9 und die Kurbelwelle 10 bilden ein Hohlleitersystem. Eine Sendespule 17 erzeugt ein charakteristisches, elektromagnetisches Feld. Die Sendespule 17 befindet sich in einer Ebene genau in der Mitte. Die Sendespule 17 erstreckt sich dabei im Isolatormaterial 30 nahe der entsprechenden Innenwandung. Das Isolatormaterial 30 begrenzt eine zylindrische Aufnahme, in der sich die Kurbelwelle 10 erstreckt. Das Isolatormaterial 30 kann beispielsweise durch ein Keramikmaterial oder dergleichen gebildet sein. Das Isolatormaterial 30 schützt die Sendespule 17 und die Empfangsspulen 12 vor Umgebungseinflüssen und hält diese an ihren Plätzen.

Der Abstand 5 ist auch zugleich der Abstand zwischen den Empfangsspulen 12 und der Sendespule 17.

Die Sendespule 17 ist mittels einer elektrischen Verbindung 18 mit einer Sendesignalerzeugung 29 verbunden. Die elektrische Verbindung 18 wird durch eine Öffnung 19 in der Hohlleiterinnenwand 9 geführt. Die Sendesignalerzeugung 29 erzeugt ein Signal mit einer konstanten Amplitude (CW) oder mit einer modulierten Amplitude (AM) jeweils mit einer Trägerfrequenz, deren Wert kleiner als die kleinste Grenzfrequenz des Hohlleitersystems ist.

Es sind vorzugsweise vier Empfangsspulen 12 vorhanden, deren Signale je über eine elektrische Verbindung 14 nach außen geführt werden. Die elektrischen Verbindungen 14 sind jeweils durch eine Öffnung 15 in der Hohlleiterinnwand 9 nach außen geführt. Auf beiden Seiten der Sendespule 17 sind je zwei Empfangsspulen 12 im gleichen Abstand 5 angeordnet. Jede Empfangsspule 12 ist als Drahtschlaufe mit einer Windung, welche ein Kreisbogensegment abdeckt, ausgebildet. Das Kreisbogensegment umschließt die Kurbelwelle 10 nicht. Es ist auch denkbar, dass der Öffnungswinkel des Kreisbogensegments der Drahtschlaufe und der Öffnungswinkel der Einkerbung verschieden sind. Auf jeder Seite sind die jeweiligen Empfangsspulen 12 symmetrisch gegenüberliegend zueinander angeordnet, wobei auch hier die linke Seite um 90° gegenüber der rechten Seite gedreht ist, wie es in Fig. 2 dargestellt ist.

Die Sendespule 17 umschließt bevorzugt die Kurbelwelle 10 als vorzugsweise kreisrunde Drahtschlaufe mit insbesondere einer Windung. Es wäre auch denkbar, dass die Sendespule 17 nur ein Segment abdeckt. Diese Anordnung ermöglicht eine bessere Montierbarkeit des Hohlleitersystems um die Kurbelwelle 10 herum. Eingebettet sind die Empfangsspulen 12 und die Sendespulen 17 in das Isolatormaterial 30, welches keine elektrische Leitfähigkeit besitzt. Das Isolatormaterial 30 hat die Aufgabe, die Empfangsspulen 12 und die Sendespule 17 an ihren Plätzen zu halten und diese vor Umgebungseinflüssen zu schützen.

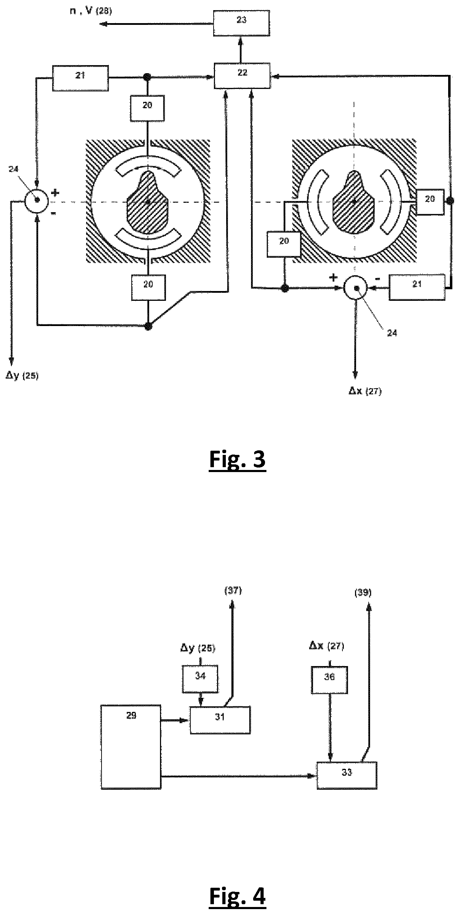

Außerhalb der Hohlleiterinnenwand 9 werden (vgl. Fig. 2 und 3) mit den nach außen geführten Signalen der vier Empfangsspulen 12 weitere Signale erzeugt. Zur Bildung jeweils eines Δy-Differentialsignals 25 für die Messung der Y-Abweichung werden die beiden entsprechenden Signale der Spulen 12 (vgl. Fig. 1a) voneinander subtrahiert. Dazu wird eine Differenzeinheit 24 verwendet. Damit bei einer Mittelstellung der Signalpegel 0 am Ausgang der Differenzeinheiten 24 erscheint, müssen elektrische Abweichungen der Signalpfade voneinander mit Hilfe einer Phasen- und Amplituden-Kalibrieranordnung 21 kompensiert werden. Diese Mittelstellung kann als ausgezeichnete Referenzlage genutzt werden.

Das Kalibrieren wird nur einmal bei der ersten Inbetriebnahme durchgeführt. Danach wird während der gesamten Betriebsdauer nur wenn notwendig nachkalibriert.

Am Ausgang der Empfangsspulen 12 ist je ein Bandpassfilter 20 angeordnet. Dieser dient dazu, Signalanteile herauszufiltern, welche im Frequenzbereich über der Grenzfrequenz des Hohlleitersystems hinaus als Störsignal auftreten. Äußere Störsignale in einem Frequenzband unterhalb der kleinsten Grenzfrequenz des Hohlleitersystems werden durch die exponentiell abnehmende Störsignalstärke im Hohlleitersystem gedämpft. Der Bandpassfilter 20 dämpft diese Störsignale zusätzlich.

In selber Weise wird das Δx-Differenzsignal 27 für die Messung der x-Abweichung gebildet.

Durch die Drehung der Kurbelwelle 10 und der Kurbelwange 3 mit dem Gegengewicht 4 erfahren die Empfangsspulen 12 eine sich in der Signalstärke und im Takt der Drehzahl n variierende elektromagnetische Feldverteilung.

Von jeder der Empfangsspulen 12 wird ein Signalteil ausgekoppelt und zu einer Frequenzspektrumsanalyse, insbesondere einem Fast-Fourier-Transformation-Algorithmus (FFT) zur Drehzahlbestimmung und zur Vibrationsüberwachung 22 geführt. Mit Hilfe der Fast-Fourier-Transformation werden die Signale einer spektralen Analyse unterzogen. Anhand des Spektrums kann die Drehzahl n, 28, sowie weitere Frequenzkomponenten, welche auf ein Vibrationsverhalten 28 hindeuten, bestimmt werden. Es werden vorzugsweise alle Signale der Empfangsspulen 12 zur spektralen Analyse hinzugezogen, damit die Wahrscheinlichkeit für eine genügend genaue Messung erhöht wird. Zudem hat diese Anordnung die Zusatzaufgabe, festzustellen, ob überhaupt ein elektromagnetisches Feld im Hohlleitersystem vorhanden ist. Ist die Sendespule 17 oder eine Baugruppe im Sendepfad defekt, so kann dies nur durch die Auswertung innerhalb der Frequenzanalyse 22 festgestellt werden. Das Differenznetzwerk ist in diesem Fall nicht eindeutig, ob kein Sendesignal vorhanden ist oder ob die gewünschte Mittelstellung herrscht. Die Differenzsignale 25 und 27 werden mit den Demodulatoren mit Tiefpassfilter 31 und 33 demoduliert und bilden dann die Regelsignale Y_R 37 und X_R 39.

Mit den Phasen und Amplituden-Kalibrieranordnungen 34, 36 werden die elektrischen Eigenschaften der Zuleitung so angepasst, dass durch die Demodulation das Vorzeichen der jeweiligen Differenzsignale 25 und 27 erhalten bleibt.

### Bezugszeichenliste:

- 1: Winkel β
- 2: Hohlleiterinnenradius
- 3: Kurbelwange
- 4: Gegengewicht
- 5: Abstand der Sendespule zu den Empfangsspulen
- 6: Z-Achse
- 7: Abstand der Ebenen der Empfangsspulenpaare
- 8: Hohlleiter
- 9: Hohlleiterinnenwand
- 10: Kurbelwelle
- 11: Rotationsachse der Kurbelwelle
- 12: Empfangsspulen
- 13: Kolben
- 14: Elektrische Verbindung der Empfangsspule nach außen
- 15: Öffnung in Hohlleiterwand für elektrische Verbindung
- 16: Pleuelstange
- 17: Sendespule
- 18: Elektrische Verbindung zur Speisung der Sendespule
- 19: Öffnung für elektrische Verbindung
- 20: Bandpassfilter
- 21: Kalibrieranordnung
- 22: Frequenzanalyse
- 23: Auswerteeinheit
- 24: Differenzeinheit
- 25: Δy-Differenzsignal
- 26: Motorblock mit Wellenlager
- 27: Δx-Differenzsignal
- 28: Signal mit Information zur Drehzahl und der Vibration der Kurbelwelle
- 29: Sendesignalerzeugung (Oszillator)
- 30: Isolatormaterial
- 31: Tiefpassfilter für Differenzsignal Δy
- 33: Tiefpassfilter für Differenzsignal Δx
- 34: Kalibrierungsanordnung für Differenzsignal Δy
- 36: Kalibrierungsanordnung für Differenzsignal Δx
- 37: Regelsignal Y_R
- 39: Regelsignal X_R

## Patentansprüche

1. Messanordnung zur Messung einer Drehlage und/oder einer Drehzahl einer Kurbelwelle (10), mit mehreren Spulen, wobei die Kurbelwelle (10) um eine Drehachse drehbar ist und eine Messsektion aufweist, wobei mit einer Sendespule (17) ein elektromagnetisches Feld erzeugbar ist, wobei mittels einer Sendeeinheit ein elektrisches Signal erzeugbar ist, wobei das elektrische Signal an der Sendespule (17) anliegt, wobei die eine Messsektion einen nicht punktsymmetrischen Querschnitt aufweist und Bereiche mit einem größeren Kurbelwellenradius (4) und Bereiche mit einem kleineren Kurbelwellenradius (3) aufweist, wobei das von der Sendespule (17) erzeugte, durch die Messsektion beeinflusste, elektromagnetische Feld von den Empfangsspulen (12) empfangbar ist, wobei ein Maß für die Drehstellung der Kurbelwelle (10) aufgrund der Änderung eines empfangenen Signals der Empfangsspulen (12) und ein Maß für die Drehlage der Kurbelwelle (10) bestimmbar ist, **dadurch gekennzeichnet, dass** die Sendespule (17) und mehrere Empfangsspulen (12) sowie die Messsektion in einem Hohlleiter angeordnet sind, wobei eine Trägerfrequenz des elektrischen Signals unterhalb einer kleinsten Grenzfrequenz des Hohlleiters liegt, wobei die Messsektion durch eine Kurbelwange (3) und ein Gegengewicht (4) gebildet ist, wobei die Kurbelwange (3) und das Gegengewicht (4) an der Kurbelwelle (10) befestigt sind oder einstückig mit der Kurbelwelle (10) ausgebildet sind.

2. Messanordnung nach Anspruch 1, **dadurch gekennzeichnet, dass** die Empfangsspulen (12) und/oder die Sendespule (17) nur eine Windung aufweisen.

3. Messanordnung nach Anspruch 1 oder 2, **dadurch gekennzeichnet, dass** zur Bestimmung der Drehlage in einer ersten radialen Richtung (X-Richtung) zwei Empfangsspulen (12) in einer radialen Ebene diametral in X-Richtung beabstandet zur Kurbelwelle (10) angeordnet sind und zur Bestimmung der Drehlage in einer zweiten radialen Richtung (Y-Richtung) zwei weitere Empfangsspulen (12) in einer radialen Ebene diametral in Y-Richtung beabstandet zur Kurbelwelle (10) angeordnet sind.

4. Messanordnung nach einem der vorstehenden Ansprüche, mit **einer Differenzeinheit (24),** mittels derer Differenzsignale aus den Signalen der ein Paar bildenden Empfangsspulen (12) bildbar sind.

5. Messanordnung nach einem der vorstehenden Ansprüche, **dadurch gekennzeichnet, dass** die Empfangsspulen (12) sich abschnittsweise kreisbogensegmentförmig um die Kurbelwelle (10) erstrecken.

6. Messanordnung nach einem der vorstehenden Ansprüche, **dadurch gekennzeichnet, dass** die Sendespule (17) die Kurbelwelle (10) nur teilweise umgreift.

7. Messanordnung nach einem der vorstehenden Ansprüche, **dadurch gekennzeichnet, dass** die Sendespule (17) die Kurbelwelle (10) vollständig umgreift.

8. Messanordnung nach einem der vorstehenden Ansprüche, **dadurch gekennzeichnet, dass** die Sendespule (17) und/oder die Empfangsspulen (12) in ein Isolatormaterial (30) eingebettet sind.

9. Messanordnung nach einem der vorstehenden Ansprüche, eingerichtet für eine Frequenzanalyse (22) mittels einer Frequenzspektrumanalyse, insbesondere einer Fast-Fourier-Transformation, zur Bestimmung einer Drehzahl und von Vibrationen der Kurbelwelle (10) .

## Claims

1. Measuring arrangement for measuring a rotational position and/or a rotation speed of a crankshaft (10), comprising a plurality of coils, wherein the crankshaft (10) can rotate about a rotation axis and has a measuring section, wherein an electromagnetic field can be generated by a transmitting coil (17), wherein an electrical signal can be generated by means of a transmitting unit, wherein the electrical signal is applied to the transmitting coil (17), wherein one measuring section has a cross section which is not point-symmetrical and has regions with a relatively large crankshaft radius (4) and regions with a relatively small crankshaft radius (3), wherein the electromagnetic field which is generated by the transmitting coil (17) and is influenced by the measuring section can be received by the receiving coils (12), wherein a measure for the rotational position of the crankshaft (10) owing to the change in a received signal of the receiving coils (12) and a measure for the rotational position of the crankshaft (10) can be determined, **characterized in that** the transmitting coil (17) and a plurality of receiving coils (12) and also the measuring section are arranged in a hollow conductor, wherein a carrier frequency of the electrical signal lies below a minimum limit frequency of the hollow conductor, wherein the measuring section is formed by a crank web (3) and an counterweight (4), wherein the crank web (3) and the counterweight (4) are fastened to the crankshaft (10) or are formed in one piece with the crankshaft (10).

2. Measuring arrangement according to Claim 1, **characterized in that** the receiving coils (12) and/or the transmitting coil (17) have/has only one turn.

3. Measuring arrangement according to Claim 1 or 2, **characterized in that**, for the purpose of determining the rotational position in a first radial direction (X direction), two receiving coils (12) are arranged in one radial plane diametrically at a distance from the crankshaft (10) in the X direction and, for the purpose of determining the rotational position in a second radial direction (Y direction), two further receiving coils (12) are arranged in one radial plane diametrically at a distance from the crankshaft (10) in the Y direction.

4. Measuring arrangement according to one of the preceding claims, having a differential unit (24) by means of which differential signals can be formed from the signals of the receiving coils (12) forming a pair.

5. Measuring arrangement according to one of the preceding claims, **characterized in that** the receiving coils (12) extend in the form of a segment of an arc of a circle around the crankshaft (10) in portions.

6. Measuring arrangement according to one of the preceding claims, **characterized in that** the transmitting coil (17) engages around the crankshaft (10) only partially.

7. Measuring arrangement according to one of the preceding claims, **characterized in that** the transmitting coil (17) engages around the crankshaft (10) completely.

8. Measuring arrangement according to one of the preceding claims, **characterized in that** the transmitting coil (17) and/or the receiving coils (12) are/is embedded into an insulator material (30).

9. Measuring arrangement according to one of the preceding claims, designed for frequency analysis (22) by means of frequency spectrum analysis, in particular a fast Fourier transform, for determining a rotation speed and vibrations of the crankshaft (10).

## Revendications

1. Arrangement de mesure destiné à mesurer une condition de rotation et/ou une vitesse de rotation d'un vilebrequin (10), comprenant plusieurs bobines, le vilebrequin (10) pouvant tourner autour d'un axe de rotation et possédant une section de mesure, un champ électromagnétique pouvant être généré avec une bobine d'émission (17), un signal électrique pouvant être généré au moyen d'une unité d'émission, le signal électrique étant appliqué à la bobine d'émission (17), la section de mesure présentant une section transversale non à symétrie ponctuelle et présentant des zones avec un rayon de vilebrequin plus grand (4) et des zones avec un rayon de vilebrequin plus petit (3), le champ électromagnétique généré par la bobine d'émission (17) et influencé par la section de mesure pouvant être reçu par les bobines de réception (12), une cote pour la position de rotation du vilebrequin (10) pouvant être déterminée sur la base de la modification d'un signal reçu des bobines de réception (12) et une cote pour la condition de rotation du vilebrequin (10), **caractérisé en ce que** la bobine d'émission (17) et plusieurs bobines de réception (12) ainsi que la section de mesure sont disposées dans un guide d'ondes, une fréquence porteuse du signal électrique étant inférieure à une fréquence limite la plus petite du guide d'ondes, la section de mesure étant formée par le flasque de manivelle (3) et un contrepoids (4), le flasque de manivelle (3) et le contrepoids (4) étant fixés au vilebrequin (10) ou étant réalisés d'un seul tenant avec le vilebrequin (10).

2. Arrangement de mesure selon la revendication 1, **caractérisé en ce que** les bobines de réception (12) et/ou la bobine d'émission (17) ne possèdent qu'un seul enroulement.

3. Arrangement de mesure selon la revendication 1 ou 2, **caractérisé en ce que** pour déterminer la condition de rotation dans une première direction radiale (direction X), deux bobines de réception (12) sont disposées dans un plan radial diamétralement espacées du vilebrequin (10) dans la direction X et pour déterminer la condition de rotation dans une deuxième direction radiale (direction Y), deux bobines de réception (12) supplémentaires sont disposées dans un plan radial diamétralement espacées du vilebrequin (10) dans la direction Y.

4. Arrangement de mesure selon l'une des revendications précédentes, comprenant une unité différentielle (24) au moyen de laquelle des signaux différentiels peuvent être formés à partir des signaux des bobines de réception (12) formant une paire.

5. Arrangement de mesure selon l'une des revendications précédentes, **caractérisé en ce que** les bobines de réception (12) s'étendent par portions autour du vilebrequin (10) en forme de segments d'arc de cercle.

6. Arrangement de mesure selon l'une des revendications précédentes, **caractérisé en ce que** la bobine d'émission (17) n'entoure que partiellement le vilebrequin (10).

7. Arrangement de mesure selon l'une des revendications précédentes, **caractérisé en ce que** la bobine d'émission (17) entoure entièrement le vilebrequin (10).

8. Arrangement de mesure selon l'une des revendications précédentes, **caractérisé en ce que** la bobine d'émission (17) et/ou les bobines de réception (12) sont enrobées dans un matériau d'isolateur (30).

9. Arrangement de mesure selon l'une des revendications précédentes, conçu pour une analyse de fréquence (22) au moyen d'une analyse de spectre de fréquences, notamment une transformée de Fourier rapide, en vue de déterminer une vitesse de rotation et des vibrations du vilebrequin (10).
